# FASCICULE DE BREVET EUROPEEN

(11) **EP 4 259 919 B1**
(45) Date de publication et mention de la délivrance du brevet: **13.08.2025**
(21) Numéro de dépôt: 21816041.4
(22) Date de dépôt: 22.11.2021
(51) Int. Cl.: F02M 21/02, F01N 5/02, F28D 15/00, F28D 5/00, F02D 19/02, F17C 7/00, F02M 37/00

(54) **SYSTEME DE PROPULSION D'UN VEHICULE**
FAHRZEUGANTRIEBSSYSTEM
VEHICLE PROPULSION SYSTEM

(30) Priorité: 08.12.2020 FR 2012839
(43) Date de publication de la demande: 18.10.2023
(73) Titulaire: Renault s.a.s, 92100 Boulogne Billancourt (FR)
(72) Inventeur: GROLET, Sébastien, 78084 Guyancourt Cedex (FR); MILLON, Jean-Pierre, 78084 Guyancourt Cedex (FR); POMMERY, William, 78084 Guyancourt Cedex (FR); RAVET, Frédéric, 91510 LARDY (FR); SANCHES, Laurent, 91510 LARDY (FR)
(74) Mandataire: Elzaburu S.L.P.
(86) Numéro de dépôt international: PCT/EP2021/082496
(87) Numéro de publication internationale: WO 2022/122363

(56) Documents cités:
- EP-A1- 3 088 792
- KR-B1- 100 722 232
- KR-B1- 102 088 950
- US-A1- 2005 193 990
- US-A1- 2015 144 105
- US-A1- 2019 063 684

## Description

La présente invention s'inscrit dans le domaine des systèmes de propulsion de véhicule, et plus particulièrement les ensembles de propulsion utilisant du gaz de pétrole liquéfié.

De tels ensembles de propulsion de véhicule comprennent généralement un réservoir de carburant, un moteur à combustion interne, un système d'alimentation en carburant du moteur à combustion interne et un système d'échappement des gaz d'échappement produits par la combustion du carburant et de son comburant dans le moteur à combustion interne.

Il est connu que certains types de moteurs à combustion interne sont configurés pour utiliser du gaz de pétrole liquéfié comme carburant. L'utilisation de gaz pétrole liquide comme carburant permet tout d'abord de diminuer le taux de particules polluantes rejetées par le moteur à combustion interne, la combustion de gaz de pétrole liquéfié dégageant une plus faible concentration en particules polluantes que la combustion de carburants traditionnels, tels que l'essence par exemple.

Le moteur à combustion interne utilise le gaz de pétrole liquéfié comme carburant à l'état gazeux. Cependant, le gaz de pétrole est stocké à l'état liquide dans un réservoir. Pour cela, le système de propulsion est adapté pour pouvoir d'une part stocker le gaz de pétrole à l'état liquide et d'autre part, permettre au moteur à combustion interne de l'utiliser comme carburant sous forme gazeuse.

Le réservoir est conçu de sorte à pouvoir maintenir le gaz pétrole à l'état liquide. Le gaz de pétrole liquéfié est ensuite propulsé à travers le système d'alimentation vers le moteur à combustion interne grâce à une pompe ménagée sur le système d'alimentation. Pour permettre au gaz de pétrole d'arriver sous forme gazeuse à l'admission du moteur à combustion interne, le système d'alimentation comprend généralement un organe de détente. Cet organe de détente abaisse la pression du gaz de pétrole à l'état liquide de manière que ce dernier se vaporise à pression ambiante. Le gaz de pétrole à l'état gazeux circulant en aval de l'organe de détente est ensuite utilisé comme carburant du moteur à combustion interne.

Il peut cependant être difficile de vaporiser le gaz de pétrole qui sort de l'organe de détente. En effet, la température du gaz de pétrole liquéfié est trop basse pour obtenir une vaporisation totale. Dans un tel cas, Des gouttelettes de gaz de pétrole à l'état liquide peuvent être présentes dans le gaz de pétrole vaporisé circulant vers le moteur à combustion interne. En présence de ces gouttelettes, la quantité de gaz de pétrole utilisée par le moteur à combustion interne, et donc sa consommation, ne peuvent pas être maîtrisées, augmentant l'émission de particules polluantes.

Un tel système de propulsion est connu du document US 2015/144105 A1.

Dans ce contexte, la présente invention propose un ensemble ou système de propulsion visant à chauffer en amont de l'organe de détente le gaz de pétrole liquéfié pour assurer le passage du gaz de pétrole de l'état liquide à l'état gazeux au travers de l'organe de détente, le chauffage du gaz de pétrole liquéfié utilisant des composants déjà présents dans le système de propulsion.

La présente invention a ainsi pour premier objet un système de propulsion pour un véhicule automobile tel que défini dans la revendication 1.

Selon l'invention, l'unité de chauffage comprend au moins un échangeur de chaleur configuré pour opérer un échange de chaleur entre le gaz de pétrole à l'état liquide parcourant le circuit et au moins une partie des gaz d'échappement qui circulent dans le système d'échappement.

Selon un mode de réalisation, l'unité de chauffage comprend un chauffage notamment électrique du GPL dans ledit circuit en boucle fermée courte.

Le moteur à combustion utilise du gaz de pétrole à l'état gazeux comme carburant, ce dernier étant stocké à l'état liquide dans le réservoir puis détendu par l'organe de détente pour le faire passer de l'état liquide à l'état gazeux.

L'unité de chauffage permet de chauffer une partie du gaz de pétrole à l'état liquide pour que ce dernier, une fois mélangé au gaz de pétrole à l'état liquide stocké dans le réservoir, augmente la température globale du gaz de pétrole à l'état liquide contenu dans le réservoir. Il est connu de chauffer l'organe de détente ou vapo-détendeur pour assurer une vaporisation du GPL en aval du vapo-détendeur. Ce chauffage peut être assuré par un circuit de refroidissement du moteur par lequel circule du liquide de refroidissement poussé par une pompe de circulation de liquide. Ce chauffage entraine une consommation d'énergie, notamment pour ladite circulation de liquide. On sait que le passage de l'état liquide à l'état gazeux du GPL est fonction de l'état initial en pression et température du GPL liquide. Il peut être facilité par une augmentation de la température du GPL liquide ici en amont du vapo-détendeur. Grâce à une élévation de la température globale du gaz de pétrole à l'état liquide contenu dans le réservoir, le gaz de pétrole à l'état liquide circulant à travers l'organe de détente passe à l'état gazeux avec une réduction significative voire totale de gouttelettes de gaz de pétrole à l'état liquide lorsque le gaz de pétrole à l'état gazeux arrive à l'admission du moteur à combustion interne.

Selon l'invention, l'unité de chauffage est configurée pour maintenir à l'état liquide le gaz de pétrole renvoyé dans le réservoir après son passage dans l'échangeur de chaleur. En d'autres termes, l'échange de chaleur qui prend place au sein de l'échangeur de chaleur est opéré pendant un temps garantissant que le gaz de pétrole, bien que réchauffé, reste à l'état liquide. Cet échange de chaleur peut aussi être déterminé par un débit de gaz de pétrole et/ou de gaz d'échappement dans l'échangeur de chaleur.

Le débit du gaz de pétrole à l'état liquide circulant à travers le circuit est ainsi contrôlé de sorte à adapter la température du gaz de pétrole à l'état liquide contenu dans le réservoir.

Selon l'invention, le système d'alimentation comprend au moins une ligne d'alimentation qui s'étend entre la pompe et l'organe de détente, le circuit étant raccordé à la ligne d'alimentation au niveau d'une bifurcation, le circuit comprenant une première passe de l'échangeur de chaleur parcourue par le gaz de pétrole à l'état liquide.

La circulation du gaz de pétrole à l'état liquide dans le circuit est permise grâce à la pompe du système d'alimentation. Autrement dit, en raccordant le circuit au système d'alimentation, le gaz de pétrole est mis en circulation dans le circuit par la pompe du système d'alimentation. De manière alternative, l'invention prévoit la présence d'une pompe spécifiquement affectée pour réaliser la circulation de gaz de pétrole au sein du circuit, et distincte de la pompe affectée au système d'alimentation.

Selon l'invention, l'unité de chauffage comprend au moins une vanne trois voies disposée au niveau de la bifurcation entre la ligne d'alimentation et le circuit. On comprend que la vanne trois voies dirige le gaz de pétrole à l'état liquide soit vers l'organe de détente, soit vers le circuit.

Selon une autre caractéristique optionnelle de l'invention, le système d'échappement comprend une conduite d'échappement qui s'étend entre le moteur à combustion interne et l'environnement extérieur du véhicule, l'unité de chauffage comprenant une boucle de circulation de gaz d'échappement qui s'étend au moins en partie en parallèle de la conduite d'échappement et qui comprend une deuxième passe de l'échangeur de chaleur destinée à être parcourue par au moins une partie des gaz d'échappement. La boucle de circulation est la partie du système par laquelle les gaz d'échappement passent en vue de chauffer le gaz de pétrole à l'état liquide présent dans le circuit.

Selon une autre caractéristique optionnelle de l'invention, l'unité de chauffage comprend au moins une valve trois voies disposée au niveau d'une intersection entre la conduite d'échappement et la boucle de circulation des gaz d'échappement.

Selon une autre caractéristique optionnelle de l'invention, la boucle de circulation des gaz d'échappement débouche sur la conduite d'échappement. On comprend par « déboucher » que les gaz d'échappement circulant à travers la boucle de circulation rejoignent la conduite d'échappement avant d'être envoyés dans l'environnement extérieur.

Selon une autre caractéristique optionnelle de l'invention, le système d'échappement comprend au moins un dispositif de traitement des polluants présents dans les gaz d'échappement, l'unité de chauffage étant disposée en aval du dispositif de traitement des polluants.

Le terme « en aval » fait ici référence au sens de circulation des gaz d'échappement au sein de la conduite concernée, en aval signifiant « après » l'objet concerné, selon le sens de circulation des gaz d'échappement. Le terme « en amont » fait quant à lui référence à « avant » l'objet concerné selon le sens de circulation des gaz d'échappement.

Selon une alternative optionnelle de l'invention, l'unité de chauffage comprend un premier échangeur de chaleur, un deuxième échangeur de chaleur et une boucle intermédiaire de fluide caloporteur, le premier échangeur de chaleur étant configuré pour être parcouru par le gaz de pétrole à l'état liquide et le fluide caloporteur tandis que le deuxième échangeur de chaleur est configuré pour être parcouru par les gaz d'échappement et le fluide caloporteur. Le transfert de calories des gaz d'échappement au gaz de pétrole à l'état liquide est ainsi opéré à l'aide d'une boucle intermédiaire de fluide caloporteur. Selon le premier mode de réalisation, l'échange de chaleur est direct entre les gaz d'échappement et le gaz de pétrole à l'état liquide, tandis qu'il est indirect pour le deuxième mode de réalisation.

Selon une autre caractéristique optionnelle de l'invention, le système d'alimentation comprend un capteur de température du gaz de pétrole à l'état liquide, le capteur de température étant disposé en amont de l'organe de détente.

L'invention concerne également un procédé d'alimentation en gaz de pétrole liquéfié d'un moteur à combustion interne constitutif d'un système de propulsion selon l'une quelconque des caractéristiques précédentes, au cours duquel on opère au sein de l'échangeur de chaleur un échange de chaleur entre le gaz de pétrole liquéfié et au moins une partie des gaz d'échappement qui circulent dans le système d'échappement.

Selon une caractéristique de l'invention, l'échange de chaleur est opéré au sein de l'échangeur de chaleur quand la température du gaz de pétrole liquéfié à l'état liquide situé en amont de l'organe de détente est inférieure à un seuil déterminé.

Le capteur de température relève la température du gaz de pétrole à l'état liquide circulant en amont de l'organe de détente et envoie cette information à une unité de contrôle de la vanne trois voies et/ou de la valve trois voies. L'unité de contrôle agit sur la vanne trois voies pour que celle-ci oriente le gaz de pétrole à l'état liquide vers le moteur à combustion interne ou vers l'échangeur de chaleur, et/ou sur la valve trois voies pour que celle-ci oriente le gaz d'échappement au moins en partie vers l'échangeur de chaleur ou directement vers l'environnement extérieur.

Selon une caractéristique de l'invention, le procédé comprend une première étape durant laquelle la vanne trois voies oriente le gaz de pétrole à l'état liquide provenant du réservoir vers la première passe de l'échangeur de chaleur à travers le circuit, la valve trois voies orientant au moins une partie des gaz vers la deuxième passe de l'échangeur de chaleur à travers la boucle de circulation, le procédé comprenant une deuxième étape durant laquelle la vanne trois voies oriente le gaz de pétrole à l'état liquide vers le moteur à combustion interne à travers la ligne d'alimentation, la valve trois voies orientant la totalité des gaz d'échappement vers l'environnement extérieur du véhicule à travers la conduite d'échappement.

D'autres caractéristiques, détails et avantages de l'invention ressortiront plus clairement à la lecture de la description qui suit d'une part, et de plusieurs exemples de réalisation donnés à titre indicatif et non limitatif en référence aux dessins schématiques annexés d'autre part, sur lesquels :
[Fig. 1] est une représentation schématique d'un système de propulsion selon l'invention et selon un premier mode de réalisation ;
[Fig. 2] est une représentation schématique d'un système de propulsion selon l'invention et selon un deuxième mode de réalisation.

Dans la suite de la description, les termes « amont » et « aval » s'entendent selon un sens de circulation d'un gaz de pétrole et/ou un gaz d'échappement à l'état liquide, gazeux ou diphasique à travers l'élément concerné.

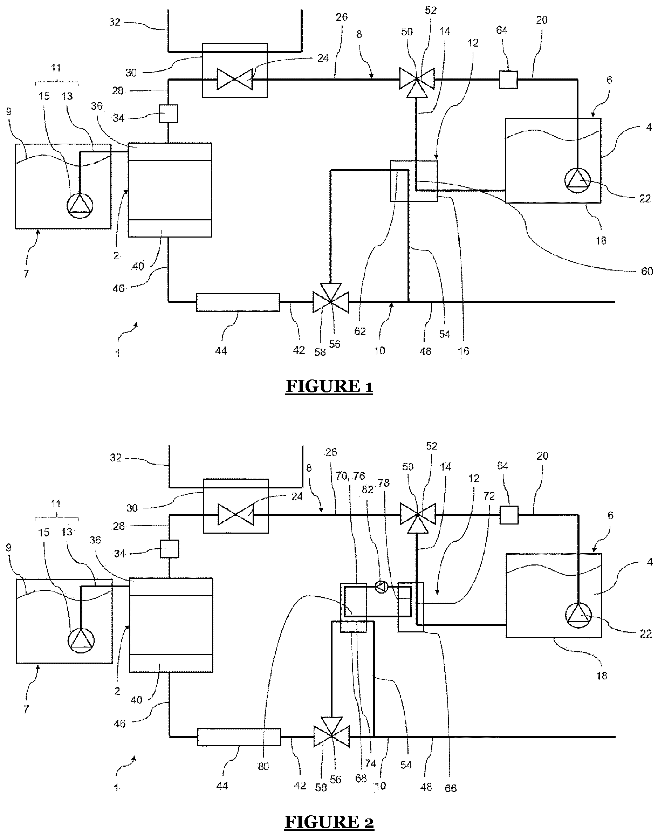

Sur la figure 1 est représenté un système de propulsion 1 pour un véhicule automobile comprenant au moins un moteur à combustion interne 2 à bi-carburation alimenté en gaz de pétrole 4 et produisant au moins un gaz d'échappement. On comprend que le moteur à combustion interne 2 utilise le gaz de pétrole 4 comme carburant et, que lors de la combustion dudit gaz de pétrole 4, des gaz d'échappement sont formés et expulsés hors du véhicule. Plus précisément, le système de propulsion 1 comprend au moins un réservoir 6 de gaz de pétrole 4 à l'état liquide, un système d'alimentation 8, le moteur à combustion interne 2 et un système d'échappement 10. Selon l'invention, le système de propulsion 1 comprend également une unité de chauffage 12 du gaz de pétrole 4 à l'état liquide qui comprend au moins un circuit 14 destiné à prélever le gaz de pétrole 4 à l'état liquide dans le réservoir 6 et à le renvoyer dans ce même réservoir 6, l'unité de chauffage 12 comprenant au moins un échangeur de chaleur 16 configuré pour opérer un échange de chaleur entre le gaz de pétrole 4 à l'état liquide parcourant le circuit 14 et au moins une partie des gaz d'échappement qui circulent dans le système d'échappement 10. Une description détaillée de l'unité de chauffage 12 sera réalisée à la suite d'une description succincte de chacun des autres éléments du système de propulsion 1.

Par ailleurs, le système de propulsion comprend une réserve 7 d'essence 9 et un système d'approvisionnement 11 du moteur à combustion interne 2 en essence 9. Le moteur à combustion interne 2 peut ainsi être alimenté en essence 9 par le système d'approvisionnement 11 ou en gaz de pétrole 4 liquéfié par le système d'alimentation 8. Le système d'approvisionnement 11 comprend une ligne d'approvisionnement 13 reliant l'intérieur de la réserve 7 au moteur à combustion interne 2 et un organe de pompage 15 configuré pour forcer la mise en circulation de l'essence 9 dans la ligne d'approvisionnement 11 depuis la réserve 7 vers le moteur à combustion interne 2. De la sorte, le moteur à combustion interne 2 est alimenté en essence 9 lorsqu'il n'est plus alimenté en gaz de pétrole 4 liquéfié, comme cela sera décrit ci-dessous.

Le réservoir 6 est configuré pour contenir le gaz de pétrole 4 à l'état liquide. Pour cela, le réservoir 6 comprend au moins une paroi 18 conçue pour contenir le gaz de pétrole à l'état liquide à une pression d'environ 15 bars configurée pour supporter une pression allant jusqu'à 30 bars.

Le système d'alimentation 8 est une liaison fluidique entre le réservoir 6 et le moteur à combustion interne 2. Pour cela, le système d'alimentation 8 comprend une ligne d'alimentation 20 qui débouche d'une part au niveau du réservoir 6 et d'autre part au niveau du moteur à combustion interne 2. Le système d'alimentation 8 comprend au moins une pompe 22 forçant la circulation du gaz de pétrole 4 à l'état liquide dans le système d'alimentation 8, et plus particulièrement dans la ligne d'alimentation 20. La pompe 22 est avantageusement disposée au niveau d'une entrée de la ligne d'alimentation 20 et dans le réservoir 6.

Le système d'alimentation 8 comprend un organe de détente 24 installé sur la ligne d'alimentation 20 entre la pompe 22 et le moteur à combustion interne 2. L'organe de détente 24 délimite ainsi une première portion 26 et une deuxième portion 28 de la ligne d'alimentation 20, la première portion 26 étant en amont de l'organe de détente 24 alors que la deuxième portion 28 étant en aval de l'organe de détente 24. On comprend que le gaz de pétrole 4 à l'état liquide mis en circulation dans la première portion 26 de la ligne d'alimentation 20 par la pompe 22 depuis le réservoir 6 vers l'organe de détente 24 subit une détente, c'est-à-dire une diminution de sa pression, par l'organe de détente 24 avant de rejoindre la deuxième portion 28 de la ligne d'alimentation 20. Cette détente entraine un changement d'état du gaz de pétrole 4. Ce dernier passe ainsi d'un état liquide à un état gazeux. Par exemple, le gaz de pétrole 4 peut être détendu à une pression inférieure à la pression du gaz de pétrole 4 présent dans le réservoir 6, faisant passer le gaz de pétrole 4 d'une pression d'environ 15 bars en amont de l'organe de détente 24 à une pression de 3 à 3,5 bars entre l'organe de détente 24 et le moteur à combustion interne 2.

Selon un mode de réalisation alternatif et/ou complémentaire de l'invention, l'organe de détente 24 peut être constitutif d'un échangeur thermique 30 comprenant d'une part l'organe de détente 24 traversé par la ligne d'alimentation 20 et d'autre part un réseau de distribution 32 d'un fluide caloporteur. Plus précisément, le gaz de pétrole 4 circulant à travers l'organe de détente 24 depuis la première portion 26 vers la deuxième portion 28 de la ligne d'alimentation 20 est chauffé par le fluide caloporteur, par convection ou par conduction. En effet, le fluide caloporteur circulant dans le réseau de distribution 32 cède des calories au gaz de pétrole 4 circulant dans la ligne d'alimentation 20 au niveau de l'organe de détente 24, augmentant ainsi la température du gaz de pétrole 4 et optimisant son passage d'un état liquide à un état gazeux.

Avantageusement, le système d'alimentation 8 comprend un filtre 34 disposé sur la deuxième portion 28 de la ligne d'alimentation 20, ce filtre 34 étant configuré par exemple pour filtrer les particules ou corps étrangers qui ne sont pas du gaz de pétrole 4 et risquant d'abimer le système d'injection du moteur à combustion interne 2.

Comme précisé ci-dessus, la ligne d'alimentation 20 débouche au niveau du moteur à combustion interne 2. Le gaz de pétrole à l'état gazeux circulant dans la deuxième portion 28 est ainsi guidé depuis l'organe de détente 24 vers le moteur à combustion interne 2. Par ailleurs, le moteur à combustion interne 2 comprend au moins une rampe d'injection 36 de carburant installée au niveau du moteur à combustion interne 2. La rampe d'injection 36 de carburant projette le gaz de pétrole à l'état gazeux dans des chambres de combustion du moteur à combustion interne 2.

Le moteur à combustion interne 2 comprend aussi un collecteur 40 de gaz d'échappement auquel les chambres de combustion du moteur à combustion interne 2 sont aérauliquement reliées. A l'issue de la combustion du carburant, des gaz d'échappement sont formés dans chacune des chambres de combustion du moteur à combustion interne 2. Le collecteur 40 récupère les gaz d'échappement formés dans les chambres de combustion pour les guider vers le système d'échappement 10.

Le système d'échappement 10 est une liaison aéraulique entre le moteur à combustion interne 2 et l'environnement extérieur du véhicule. Pour cela, le système d'échappement 10 comprend au moins une conduite d'échappement 42 s'étendant entre le moteur à combustion interne 2 et l'environnement extérieur du véhicule.

Le système d'échappement 10 comprend au moins un dispositif de traitement des polluants 44 présents dans les gaz d'échappement circulant dans la conduite d'échappement 42. Le dispositif de traitement des polluants 44 délimite une première partie 46 et une deuxième partie 48 de la conduite d'échappement 42, la première partie 46 de la conduite d'échappement 42 étant disposée en amont du dispositif de traitement des polluants 44, la deuxième partie 48 de la conduite étant quant à elle disposée en aval dudit dispositif. Le dispositif de traitement des polluants 44 assainit les gaz d'échappement circulant au travers dans celui-ci, par exemple en filtrant des particules polluantes ou en les oxydant.

Par ailleurs, et selon un mode de réalisation alternatif ou complémentaire de l'invention, le système d'échappement 10 est avantageusement relié à un système de compression des gaz d'admission. On comprend que le système de compression est relié aérauliquement au niveau de la première partie 46 de la conduite d'échappement 42 de sorte qu'au moins une partie des gaz d'échappement circulant dans cette première partie 46 de la conduite d'échappement 42 se dirige vers le système de compression. Dans le cas d'un turbocompresseur, les gaz d'échappement entrainent en rotation une turbine placée dans une conduite d'admission d'air. Cet air est admis dans les chambres de combustion du moteur à combustion interne, le gaz de pétrole vaporisé étant injecté dans cet air, par exemple au sein de la chambre de combustion.

On va maintenant décrire plus particulièrement l'unité de chauffage 12 selon un premier mode de réalisation en référence à la figure 1.

Pour rappel et tel qu'illustré sur la figure 1, l'unité de chauffage 12 du gaz de pétrole 4 à l'état liquide comprend au moins le circuit 14 destiné à prélever le gaz de pétrole 4 à l'état liquide dans le réservoir 6 et à le renvoyer dans le réservoir 6. L'unité de chauffage 12 comprend également l'échangeur de chaleur 16 configuré pour opérer un échange de chaleur entre le gaz de pétrole 4 à l'état liquide parcourant le circuit 14 et au moins une partie des gaz d'échappement qui circulent dans le système d'échappement 10. On comprend que le gaz de pétrole 4 à liquide parcourant le circuit 14 provient du réservoir 6 et qu'il est chauffé au niveau de l'échangeur de chaleur 16 par les calories contenues dans les gaz d'échappement produit par le moteur à combustion interne 2.

De plus, l'unité de chauffage 12 est configurée pour maintenir à l'état liquide le gaz de pétrole 4 renvoyé dans le réservoir 6 après son passage à travers l'échangeur de chaleur 16. Le gaz de pétrole 4 à l'état liquide retourne dans le réservoir 6 après avoir été réchauffé par les gaz d'échappement dans l'échangeur de chaleur 16 sans pour autant passer d'un état liquide à un état gazeux. Grâce à l'unité de chauffage 12, le gaz de pétrole 4 à l'état liquide chauffé arrivant dans le réservoir 6 contribue au réchauffement général du gaz de pétrole 4 à l'état liquide stocké dans le réservoir 6. Une telle élévation de la température du gaz de pétrole à l'état liquide contenu dans le réservoir 6 favorise l'évaporation optimale de ce gaz de pétrole à l'état liquide par l'organe de détente en aval de l'organe de détente.

Tel qu'illustré sur la figure 1, le circuit 14 est configuré pour que le gaz de pétrole 4 à l'état liquide provenant du réservoir 6 circule à travers le circuit 14 pour ensuite retourner dans le réservoir 6. Pour cela, le circuit 14 s'étend ici entre la première portion 26 de la ligne d'alimentation 20 et le réservoir 6. Il existe une bifurcation 50 au niveau de l'intersection du circuit 14 et de la première portion 26 de la ligne d'alimentation 20 au niveau de laquelle le gaz de pétrole 4 à l'état liquide peut circuler d'une part vers l'organe de détente 24 à travers la ligne d'alimentation 20 ou d'autre part vers l'échangeur de chaleur 16 et le réservoir 6 à travers le circuit 14.

Selon l'invention, l'unité de chauffage 12 comprend au moins une vanne trois voies 52 disposée au niveau de la bifurcation 50 entre la ligne d'alimentation 20 et le circuit 14. La vanne trois voies 52 guide le gaz de pétrole 4 à l'état liquide circulant dans la première portion 26 de la ligne d'alimentation 20 depuis le réservoir 6 vers l'organe de détente 24 ou à travers le circuit 14 qui comprend l'échangeur de chaleur 16. Autrement dit, la vanne trois voies 52 est conçues pour permettre la circulation du gaz de pétrole 4 à l'état liquide du réservoir 6 soit en totalité vers l'organe de détente 24, soit en totalité vers le circuit 14 et l'échangeur de chaleur 16.

Selon l'invention, l'unité de chauffage 12 comprend une boucle de circulation 54 des gaz d'échappement qui s'étend au moins en partie en parallèle de la conduite d'échappement 42 et qui parcourt l'échangeur de chaleur 16. On comprend qu'il y a une intersection 56 où la boucle de circulation 54 est raccordée à la conduite d'échappement 42, les gaz d'échappement circulant vers l'environnement extérieur du véhicule au moins à travers la conduite d'échappement 42, en passant ou non à travers la boucle de circulation 54.

Par ailleurs et tel qu'illustré ici sur la figure 1, les gaz d'échappement circulant à travers la boucle de circulation 54 circulent ensuite vers la conduite d'échappement 42et se mélangent aux gaz d'échappement circulant déjà dans la conduite d'échappement 42.

L'unité de chauffage 12 comprend au moins une valve trois voies 58 dispose au niveau de l'intersection 56 entre la conduite d'échappement 42 et la boucle de circulation 54 de gaz d'échappement. La valve trois voies 58 guide les gaz d'échappement circulant dans la conduite d'échappement 42 depuis le moteur à combustion interne 2 vers l'environnement extérieur du véhicule ou à travers la boucle de circulation 54 et l'échangeur de chaleur 16. Autrement dit, la valve trois voies 58 est conçues pour permettre la circulation des gaz d'échappement du moteur à combustion interne 2 soit directement vers l'environnement extérieur du véhicule, soit en totalité vers la boucle de circulation 54 et l'échangeur de chaleur 16.

Par ailleurs, l'unité de chauffage 12, et plus particulièrement la boucle de circulation 54 est disposée en aval du dispositif de traitement des polluants 44 présents dans les gaz d'échappement. En outre, l'intersection 56 entre la boucle de circulation 54 et la conduite d'échappement 42, et par conséquent la valve trois voies 58, sont disposées en aval du dispositif de traitement des polluants 44 et plus précisément au niveau de la deuxième partie 48 de la conduite d'échappement 42.

L'échangeur de chaleur 16 comprend une première passe 60 constitutive du circuit 14 et une deuxième passe 62 constitutive de la boucle de circulation 54, le gaz de pétrole 4 à l'état liquide circulant dans le circuit 14 traversant la première passe 60 de l'échangeur de chaleur 16, les gaz d'échappement circulant dans la boucle de circulation 54 traversant quant à eux la deuxième passe 62. L'échange de chaleur entre le gaz de pétrole 4 à l'état liquide et les gaz d'échappement se réalise au niveau des première et deuxième passes 60, 62 de l'échangeur de chaleur 16, les gaz d'échappement cédant des calories au gaz de pétrole 4 à l'état liquide, augmentant ainsi sa température. En effet, les gaz d'échappement issus du moteur à combustion interne 2 présentent une température plus élevée que la température du gaz de pétrole 4 à l'état liquide circulant dans la première passe 60, la cession de calories étant ainsi en faveur du gaz de pétrole 4 à l'état liquide. Le gaz de pétrole 4 à l'état liquide chauffé retourne ensuite dans le réservoir 6. Les gaz d'échappement refroidis retournent quant à eux dans la conduite d'échappement 42 où ils sont ensuite guidés vers l'environnement extérieur du véhicule.

Selon un mode de réalisation alternatif à celui décrit ci-dessus, la deuxième passe 62 est constitutive de la conduite d'échappement 42, l'échange de chaleur se réalisant entre le gaz de pétrole 4 à l'état liquide parcourant le circuit 14 et les gaz d'échappement circulant dans la conduite d'échappement 42.

Par ailleurs, le système d'alimentation 8 comprend un capteur de température 64 du gaz de pétrole 4 à l'état liquide, le capteur de température 64 étant disposé sur la ligne d'alimentation 20 en amont de l'organe de détente 24. Le capteur de température 64 relève la température du gaz de pétrole 4 à l'état liquide circulant dans la première portion 26 de la ligne d'alimentation 20 vers l'organe de détente 24. Les relevés de température permettent de déterminer si le gaz de pétrole 4 à l'état liquide est suffisamment chaud pour assurer un passage à l'état gazeux du gaz de pétrole 4 au moment où celui-ci passera à travers l'organe de détente 24.

Par exemple, lorsque que le capteur relève une température insuffisamment élevée au démarrage du véhicule, la vanne trois voies 52 envoie la totalité du gaz de pétrole 4 à l'état liquide circulant entre la pompe 22 et la vanne trois voies 52 vers l'échangeur de chaleur 16 pour chauffer le gaz de pétrole 4 à l'état liquide circulant dans la première passe 60, et par voie de conséquence le gaz de pétrole 4 à l'état liquide stocké dans le réservoir 6. Le moteur à combustion interne 2 n'étant pas alimenté en gaz de pétrole 4 liquéfié, il est alors alimenté en essence 9. Parallèlement, la valve trois voies 58 guide la totalité du gaz d'échappement produit par la combustion de l'essence 9 dans le moteur à combustion interne 2 vers la deuxième passe 62 de l'échangeur de chaleur 16 pour contribuer à apporter suffisamment de calories au gaz de pétrole 4 à l'état liquide circulant dans la première passe 60 de l'échangeur de chaleur 16. Une fois que le capteur de température 64 relève une température suffisante du gaz de pétrole 4 à l'état liquide, le moteur à combustion interne 2 bascule de l'injection essence 9 à l'injection gaz de pétrole 4. La vanne trois voies 52 et la valve trois voies 58 changent de position et guident respectivement le gaz de pétrole 4 à l'état liquide vers l'organe de détente 24 et les gaz d'échappement directement vers l'environnement extérieur du véhicule.

On va maintenant décrire un deuxième mode de réalisation de l'unité de chauffage 12 en référence à la figure 2. Certaines références en commun avec les deux modes de réalisation seront réutilisées dans la description du deuxième mode de réalisation et feront référence aux mêmes objets.

Selon le deuxième mode de réalisation de l'invention et tel qu'illustré sur la figure 2, l'unité de chauffage 12 comprend un premier échangeur de chaleur 66, un deuxième échangeur de chaleur 68 et une boucle intermédiaire 70 de fluide caloporteur, le premier échangeur de chaleur 66 étant configuré pour être parcouru par le gaz de pétrole 4 à l'état liquide et le fluide caloporteur tandis que le deuxième échangeur de chaleur 68 est configuré pour être parcouru par les gaz d'échappement et le fluide caloporteur.

Le circuit 14 s'étend entre la ligne d'alimentation 20 et jusqu'au réservoir 6, en traversant au moins en partie le premier échangeur de chaleur 66. Ce premier échangeur comprend une première passe 72 constitutive du circuit 14 configurée pour que du gaz de pétrole 4 à l'état liquide y circule.

La boucle de circulation 54 est quant à elle issue de la deuxième partie 48 de la conduite d'échappement 42 et débouche également dans la deuxième partie 48 de la conduite d'échappement 42, la boucle de circulation 54 traversant au moins en partie le deuxième échangeur de chaleur 68. Le deuxième échangeur de chaleur 68 comprend un premier passage 74 constitutif de la boucle de circulation 54, le premier passage 74 étant configuré pour que du gaz d'échappement y circulent.

La boucle intermédiaire 70 comprend au moins un conduit 76 s'étendant d'une part dans le premier échangeur de chaleur 66 et d'autre part dans le deuxième échangeur de chaleur 68 et dans lequel est mis en circulation le fluide caloporteur. Le premier échangeur de chaleur 66 comprend une deuxième passe 78 constitutive du conduit 76 de la boucle intermédiaire 70, le deuxième échangeur de chaleur 68 comprenant un deuxième passage 80 constitutif également du conduit 76 de la boucle intermédiaire 70.

La boucle intermédiaire 70 comprend un élément de pompage 82 forçant le fluide caloporteur à circuler dans le conduit 76. Le conduit 76 forme ici une boucle fermée, le fluide caloporteur circulant à travers la deuxième passe 78 du premier échangeur de chaleur 66 puis à travers le deuxième passage 80 du deuxième échangeur de chaleur 68.

Pour que les gaz d'échappement circulant dans la boucle de circulation 54 chauffent le gaz de pétrole 4 à l'état liquide circulant dans le circuit 14, les gaz d'échappement circulant dans le premier passage 74 du deuxième échangeur de chaleur 68 échangent des calories avec le fluide caloporteur circulant dans le deuxième passage 80 du deuxième échangeur de chaleur 68. Plus particulièrement, les gaz d'échappement cèdent des calories au fluide caloporteur dans le deuxième échangeur de chaleur 68, la température des gaz d'échappement étant supérieure à la température du fluide caloporteur circulant dans le deuxième passage 80. Le fluide caloporteur chauffé circule ensuite vers puis à travers la deuxième passe 78 du premier échangeur de chaleur 66. Lorsqu'il circule à travers la deuxième passe 78 du premier échangeur de chaleur 66, le fluide caloporteur échange à son tour des calories avec le gaz de pétrole 4 à l'état liquide circulant dans la première passe 72 du premier échangeur de chaleur 66. Plus précisément, le fluide caloporteur cède des calories au gaz de pétrole 4 à l'état liquide, la température du fluide caloporteur étant supérieure à la température du gaz de pétrole 4 à l'état liquide. Le gaz de pétrole 4 à l'état liquide circulant à travers la première passe 72 du premier échangeur de chaleur 66 est ainsi chauffé par le fluide caloporteur et parcourt ensuite le circuit 14 vers le réservoir 6. Le gaz de pétrole 4 à l'état liquide chauffé se mélange ensuite au gaz de pétrole 4 à l'état liquide stocké dans le réservoir 6, augmentant ainsi la température générale du gaz de pétrole 4 liquide, optimisant *infine* le passage à l'état gazeux du gaz de pétrole 4 circulant à travers l'organe de détente 24.

L'invention concerne également un procédé d'alimentation en gaz de pétrole 4 d'un moteur à combustion interne 2, au cours duquel on opère au sein de l'échangeur de chaleur 16 un échange de chaleur entre le gaz de pétrole 4 liquéfié et au moins une partie des gaz d'échappement qui circulent dans le système d'échappement 10, en référence à la figure 1. Plus précisément, le gaz d'échappement circulant dans la deuxième passe 62 de l'échangeur de chaleur 16 cède des calories au gaz de pétrole 4 à l'état liquide circulant dans la première passe 60 de l'échangeur de chaleur 16, la température du gaz de pétrole 4 à l'état liquide augmentant. Le gaz de pétrole 4 à l'état liquide réchauffé circule ensuite vers le réservoir 6, réchauffant au moins en partie le gaz de pétrole 4 à l'état liquide stocké dans le réservoir 6.

Cet échange de chaleur entre le gaz de pétrole 4 à l'état liquide et le gaz d'échappement peut être réalisé lorsque le capteur de température détecte une température du gaz de pétrole 4 à l'état liquide circulant en amont de l'organe de détente 24 inférieure à un seuil déterminé. Le gaz de pétrole 4 à l'état liquide n'étant pas suffisamment chaud pour permettre une vaporisation totale du gaz de pétrole 4 en aval de l'organe de détente 24, il doit être réchauffé, notamment en circulant à travers la première passe 60 de l'échangeur de chaleur 16.

Par ailleurs, le procédé comprend au moins deux étapes se déroulant l'une à la suite de l'autre.

Tel qu'illustré sur la figure 1, le procédé comprend une première étape durant laquelle la vanne trois voies 52 oriente le gaz de pétrole 4 à l'état liquide provenant du réservoir 6 vers la première passe 60 de l'échangeur de chaleur 16 à travers le circuit 14, la valve trois voies 58 orientant les gaz d'échappement vers la deuxième passe 62 de l'échangeur de chaleur 16 à travers la boucle de circulation 54. Le moteur à combustion interne 2 n'étant pas alimenté par du gaz de pétrole 4 à l'état liquide, de l'essence 9 est envoyé au moteur à combustion interne 2 par le système d'approvisionnement 11, la combustion de l'essence 9 dans le moteur à combustion interne 2 produit au moins un gaz d'échappement qui est orienté par la valve trois voies vers la deuxième passe 62 de l'échangeur de chaleur 16. On comprend que durant cette première étape, le gaz de pétrole 4 à l'état liquide circule à travers la première passe 60 et est chauffé par les gaz d'échappement circulant dans la deuxième passe 62 de l'échangeur de chaleur 16. Le gaz de pétrole 4 à l'état liquide parcourt ensuite le circuit 14 vers le réservoir 6. En se mélangeant au gaz de pétrole 4 à l'état liquide stocké dans le réservoir 6, la température globale du gaz de pétrole 4 à l'état liquide circulant dans le réservoir 6 augmente sensiblement.

Le procédé comprend une deuxième étape durant laquelle la vanne trois voies 52 oriente le gaz de pétrole 4 à l'état liquide vers le moteur à combustion interne 2 à travers la ligne d'alimentation 20, la valve trois voies orientant les gaz d'échappement vers l'environnement extérieur du véhicule à travers la conduite d'échappement 42. Une fois que le gaz de pétrole 4 à l'état liquide contenu dans le réservoir 6 présente une température globale suffisante pour assurer une vaporisation du GPL optimale au passage de l'organe de détente, la vanne trois voies 52 guide le gaz de pétrole 4 à l'état liquide vers ledit organe de détente 24, Le gaz de pétrole à l'état gazeux circule ensuite vers le moteur à combustion interne 2, ce dernier basculant alors de l'injection d'essence 9 à l'injection de gaz de pétrole 4. Les gaz d'échappement produits par le moteur à combustion interne 2 circulent au moins en partie vers la valve trois voies 58 qui, quant à elle, oriente les gaz d'échappement directement vers l'environnement extérieur du véhicule, en l'empêchant de faire circuler les gaz d'échappement à l'échangeur de chaleur 16.

La nature de l'échangeur de chaleur décrit ci-dessus peut varier tant que ce sont les gaz d'échappement qui apportent les calories nécessaires au chauffage du gaz de pétrole 4 à l'état liquide. De plus, les valeurs de pression et de températures indiquées ci-dessus ne sont pas strictement limitatives et peuvent sensiblement varier.

## Revendications

1. Système de propulsion (1) pour un véhicule automobile, comprenant au moins un réservoir (6) destiné à contenir un gaz de pétrole (4) à l'état liquide, un système d'alimentation (8) en gaz de pétrole (4), un moteur à combustion interne (2) et un système d'échappement (10), le système d'alimentation (8) comprenant au moins pompe (22) de mise en circulation du gaz de pétrole (4) à l'état liquide dans la système d'alimentation (8) et un organe de détente (24) du gaz de pétrole (4) à l'état liquide, le système de propulsion (1) comprenant une unité de chauffage (12) du gaz de pétrole (4) à l'état liquide qui comprend au moins un circuit (14) destiné à prélever le gaz de pétrole (4) à l'état liquide dans le réservoir (6) et à le renvoyer vers le réservoir (6), **caractérisé en ce que** l'unité de chauffage (12) comprend au moins un échangeur de chaleur (16) configuré pour opérer un échange de chaleur entre le gaz de pétrole (4) à l'état liquide parcourant le circuit (14) et au moins une partie des gaz d'échappement qui circulent dans le système d'échappement (10), le système d'alimentation (8) comprenant au moins une ligne d'alimentation (20) qui s'étend entre la pompe (22) et l'organe de détente (24), le circuit (14) étant raccordé à la ligne d'alimentation (20) au niveau d'une bifurcation (50), le circuit (14) comprenant une première passe (60) de l'échangeur de chaleur (16) parcourue par le gaz de pétrole (4) à l'état liquide dans lequel l'unité de chauffage (12) comprend au moins une vanne trois voies (52) disposée au niveau de la bifurcation (50) entre la ligne d'alimentation (20) et le circuit (14)

2. Système de propulsion (1) selon la revendication précédente, dans lequel l'unité de chauffage (12) est configurée pour maintenir à l'état liquide le gaz de pétrole (4) renvoyé dans le réservoir (6) après son passage dans l'échangeur de chaleur (16).

3. Système de propulsion (1) selon l'une quelconque des revendications 1 ou 2, dans lequel le système d'échappement (10) comprend une conduite d'échappement (42) qui s'étend entre le moteur à combustion interne (2) et l'environnement extérieur du véhicule, l'unité de chauffage (12) comprenant une boucle de circulation (54) de gaz d'échappement qui s'étend au moins en partie en parallèle de la conduite d'échappement (42) et qui comprend une deuxième passe (62) de l'échangeur de chaleur (16) destinée à être parcourue par au moins une partie des gaz d'échappement.

4. Système de propulsion (1) selon la revendication précédente, dans lequel l'unité de chauffage (12) comprend au moins une valve trois voies (58) disposée au niveau d'une intersection (56) entre la conduite d'échappement (42) et la boucle de circulation (54) des gaz d'échappement.

5. Système de propulsion (1) selon l'une quelconque des revendications 1 ou 3, dans lequel la boucle de circulation (54) des gaz d'échappement débouche sur la conduite d'échappement (42).

6. Système de propulsion (1) selon l'une quelconque des revendications précédentes, dans lequel l'unité de chauffage (12) comprend un premier échangeur de chaleur (66), un deuxième échangeur de chaleur (68) et une boucle intermédiaire (70) de fluide caloporteur, le premier échangeur de chaleur (66) étant configuré pour être parcouru par le gaz de pétrole (4) à l'état liquide et le fluide caloporteur tandis que le deuxième échangeur de chaleur (68) est configuré pour être parcouru par les gaz d'échappement et le fluide caloporteur.

7. Système de propulsion (1) selon l'une quelconque des revendications précédentes, dans lequel le système d'alimentation (8) comprend un capteur de température (64) du gaz de pétrole (4) à l'état liquide, le capteur de température (64) étant disposé en amont de l'organe de détente (24).

8. Procédé d'alimentation en gaz de pétrole liquéfié (4) d'un moteur à combustion interne (2) constitutif d'un système de propulsion (1) selon l'une quelconque des revendications précédentes, au cours duquel on opère au sein de l'échangeur de chaleur (16) un échange de chaleur entre le gaz de pétrole liquéfié (4) et au moins une partie des gaz d'échappement qui circulent dans le système d'échappement (10).

9. Procédé d'alimentation en gaz de pétrole liquéfié (4) selon la revendication précédente, au cours duquel l'échange de chaleur est opéré au sein de l'échangeur de chaleur (16) quand la température du gaz de pétrole liquéfié (4) à l'état liquide situé en amont de l'organe de détente (24) est inférieure à un seuil déterminé.

10. Procédé d'alimentation en gaz de pétrole liquéfié (4) selon la revendication précédente, le système de propulsion (1) comprenant l'objet des revendications 1, 2, le procédé comprenant une première étape durant laquelle la vanne trois voies (52) oriente le gaz de pétrole (4) à l'état liquide provenant du réservoir (6) vers la première passe (60) de l'échangeur de chaleur (16) à travers le circuit (14), la valve trois voies (58) orientant au moins une partie des gaz d'échappement vers la deuxième passe (62) de l'échangeur de chaleur (16) à travers la boucle de circulation (54), procédé comprenant une deuxième étape durant laquelle la vanne trois voies (52) oriente le gaz de pétrole (4) à l'état liquide vers le moteur à combustion interne (2) à travers la ligne d'alimentation (20), la valve trois voies orientant la totalité des gaz d'échappement vers l'environnement extérieur du véhicule à travers la conduite d'échappement (42).

## Patentansprüche

1. Antriebssystem (1) für ein Kraftfahrzeug, umfassend mindestens einen Tank (6), der dazu bestimmt ist, ein Erdölgas (4) in flüssigem Zustand aufzunehmen, ein Versorgungssystem (8) für das Erdölgas (4), einen Verbrennungsmotor (2) und ein Abgassystem (10), wobei das Versorgungssystem (8) mindestens eine Pumpe (22) zum Umwälzen des Erdölgases (4) in flüssigem Zustand in dem Versorgungssystem (8) und ein Element zum Entspannen (24) des Erdölgases (4) in flüssigem Zustand umfasst, wobei das Antriebssystem (1) eine Heizeinheit (12) für das Erdölgas (4) in flüssigem Zustand umfasst, die mindestens einen Kreislauf (14) umfasst, der dazu bestimmt ist, das Erdölgas (4) in flüssigem Zustand aus dem Tank (6) zu entnehmen und es zurück in den Tank (6) zu leiten, **dadurch gekennzeichnet, dass** die Heizeinheit (12) mindestens einen Wärmetauscher (16) umfasst, der so eingerichtet ist, dass er einen Wärmeaustausch zwischen dem Erdölgas (4) in flüssigem Zustand, das den Kreislauf (14) durchläuft, und mindestens einem Teil der Abgase, die im Abgassystem (10) strömen, betreibt, wobei das Versorgungssystem (8) mindestens eine Versorgungsleitung (20) umfasst, die sich zwischen der Pumpe (22) und dem Entspannungselement (24) erstreckt, wobei der Kreislauf (14) an einer Abzweigung (50) mit der Versorgungsleitung (20) verbunden ist, wobei der Kreislauf (14) einen ersten Durchgang (60) des Wärmetauschers (16) umfasst, durch den das Erdölgas (4) in flüssigem Zustand strömt, wobei die Heizeinheit (12) mindestens ein Dreiwegeventil (52) umfasst, das an der Abzweigung (50) zwischen der Versorgungsleitung (20) und dem Kreislauf (14) angeordnet ist

2. Antriebssystem (1) nach dem vorhergehenden Anspruch, wobei die Heizeinheit (12) so eingerichtet ist, dass sie das in den Tank (6) zurückgeführte Erdölgas (4) nach seinem Durchlauf durch den Wärmetauscher (16) im flüssigen Zustand hält.

3. Antriebssystem (1) nach einem der Ansprüche 1 oder 2, wobei das Abgassystem (10) eine Abgasleitung (42) umfasst, die sich zwischen dem Verbrennungsmotor (2) und der äußeren Umgebung des Fahrzeugs erstreckt, wobei die Heizeinheit (12) eine Abgasumwälzschleife (54) umfasst, die sich mindestens teilweise parallel zur Abgasleitung (42) erstreckt und einen zweiten Durchgang (62) des Wärmetauschers (16) umfasst, die dazu bestimmt ist, von mindestens einem Teil der Abgase durchströmt zu werden.

4. Antriebssystem (1) nach dem vorhergehenden Anspruch, wobei die Heizeinheit (12) mindestens ein Dreiwegeventil (58) umfasst, das an einem Schnittpunkt (56) zwischen der Abgasleitung (42) und der Abgasumwälzschleife (54) angeordnet ist.

5. Antriebssystem (1) nach einem der Ansprüche 1 oder 3, wobei die Abgasumwälzschleife (54) in die Abgasleitung (42) mündet.

6. Antriebssystem (1) nach einem der vorhergehenden Ansprüche, wobei die Heizeinheit (12) einen ersten Wärmetauscher (66), einen zweiten Wärmetauscher (68) und eine Wärmeträgermedium-Zwischenschleife (70) umfasst, wobei der erste Wärmetauscher (66) so eingerichtet ist, dass er von dem Erdölgas (4) in flüssigem Zustand und dem Wärmeträgermedium durchströmt wird, während der zweite Wärmetauscher (68) so eingerichtet ist, dass er von den Abgasen und dem Wärmeträgermedium durchströmt wird.

7. Antriebssystem (1) nach einem der vorhergehenden Ansprüche, wobei das Versorgungssystem (8) einen Temperatursensor (64) für das Erdölgas (4) in flüssigem Zustand umfasst, wobei der Temperatursensor (64) vor dem Entspannungselement (24) angeordnet ist.

8. Verfahren zur Versorgung (4) eines Verbrennungsmotors (2) mit Flüssiggas, der ein Antriebssystem (1) nach einem der vorhergehenden Ansprüche darstellt, bei dem innerhalb des Wärmetauschers (16) ein Wärmeaustausch zwischen dem Flüssiggas (4) und mindestens einem Teil der Abgase, die durch das Abgassystem (10) strömen, erfolgt.

9. Verfahren zur Versorgung mit Flüssiggas (4) nach dem vorhergehenden Anspruch, bei dem der Wärmeaustausch innerhalb des Wärmetauschers (16) erfolgt, wenn die Temperatur des Flüssiggases (4) im flüssigen Zustand, das sich vor dem Entspannungselement (24) befindet, unter einem bestimmten Schwellenwert liegt.

10. Verfahren zur Versorgung mit Flüssiggas (4) nach dem vorhergehenden Anspruch, wobei das Antriebssystem (1) den Gegenstand der Ansprüche 1, 2 umfasst, wobei das Verfahren einen ersten Schritt umfasst, bei dem das Dreiwegeventil (52) das Erdölgas (4) in flüssigem Zustand aus dem Tank (6) durch den Kreislauf (14) in den ersten Durchgang (60) des Wärmetauschers (16) leitet, wobei das Dreiwegeventil (58) mindestens einen Teil der Abgase durch die Umwälzschleife (54) in den zweiten Durchgang (62) des Wärmetauschers (16) leitet, wobei das Verfahren einen zweiten Schritt umfasst, bei dem das Dreiwegeventil (52) das Erdölgas (4) in flüssigem Zustand zum Verbrennungsmotor (2) durch die Versorgungsleitung (20) leitet, wobei das Dreiwegeventil das gesamte Abgas durch die Abgasleitung (42) in die äußere Umgebung des Fahrzeugs leitet.

## Claims

1. A propulsion system (1) for a motor vehicle, comprising at least one tank (6) intended to contain a liquefied petroleum gas (4), system (8) for feeding petroleum gas (4), an internal combustion engine (2) and an exhaust system (10), the feed system (8) comprising at least one pump (22) for circulating the liquefied petroleum gas (4) in the feed system (8) and a member (24) for expanding the liquefied petroleum gas (4), the propulsion system (1) comprising a unit (12) the heating the liquefied petroleum gas (4) which comprises at least one circuit (14) intended to draw the liquefied petroleum gas (4) from the tank (6) and return it to the tank (6), **characterised in that** the heating unit (12) comprises at least one heat exchanger (16) configured to operate a heat exchange between the liquefied petroleum gas (4) flowing through the circuit (14) and at least part of the exhaust gases that flow through the exhaust system (10), the feed system (8) comprising at least one feed line (20) which extends between the pump (22) and the expansion member (24), the circuit (14) being connected to the feed line (20) at a bifurcation (50), the circuit (14) comprising a first pass (60) of the heat exchanger (16) through which the liquefied petroleum gas (4) passes wherein the heating unit (12) comprises at least one three-way valve (52) disposed at the bifurcation (50) between the feed line (20) and the circuit (14)

2. The propulsion system (1) according to the preceding claim, wherein the heating unit (12) is configured to keep in a liquid state the petroleum gas (4) returned into the tank (6) after passage thereof through the heat exchanger (16).

3. The propulsion system (1) according to any one of claims 1 or 2, wherein the exhaust system (10) comprises an exhaust pipe (42) that extends between the internal combustion engine (2) and the outside environment of the vehicle, the heating unit (12) comprising an exhaust gas circulation loop (54) which extends at least in part parallel to the exhaust pipe (42) and which comprises a second pass (62) of the heat exchanger (16) intended to be passed through by at least part of the exhaust gases.

4. The propulsion system (1) according to the preceding claim, wherein the heating unit (12) comprises at least one three-way valve (58) disposed at an intersection (56) between the exhaust pipe (42) and the exhaust gas circulation loop (54).

5. The propulsion system (1) according to any one of claims 1 or 3, wherein the exhaust gas circulation loop (54) opens into the exhaust pipe (42).

6. The propulsion system (1) according to any one of the preceding claims, wherein the heating unit (12) comprises a first heat exchanger (66), a second heat exchanger (68) and a heat-transfer fluid intermediate loop (70), the first heat exchanger (66) being configured to be passed through by the liquefied petroleum gas (4) and the heat-transfer fluid whereas the second heat exchanger (68) is configured to be passed through by the exhaust gases and the heat-transfer fluid flow.

7. The propulsion system (1) according to any one of the preceding claims, wherein the feed system (8) comprises a temperature sensor (64) for the liquefied petroleum gas (4), the temperature sensor (64) being disposed upstream of the expansion member (24).

8. A method for feeding liquefied petroleum gas (4) to an internal combustion engine (2) belonging to a propulsion system (1) according to any one of the preceding claims, wherein a heat exchange is operated within the heat exchanger (16) between the liquefied petroleum gas (4) and at least part of the exhaust gases that flow through the exhaust system (10).

9. The method for feeding liquefied petroleum gas (4) according to the preceding claim, during which the heat exchange is operated within the heat exchanger (16) when the temperature of the liquefied petroleum gas (4) located upstream of the expansion member (24) is lower than a given threshold.

10. The method for feeding liquefied petroleum gas (4) according to the preceding claim, the propulsion system (1) comprising the object of claims 1, 2, the method comprising a first step during which the three-way valve (52) directs the liquefied petroleum gas (4) originating from the tank (6) towards the first pass (60) of the heat exchanger (16) through the circuit (14), the three-way valve (58) directing at least part of the exhaust gases towards the second pass (62) of the heat exchanger (16) through the circulation loop (54), which method comprising a second step during which the three-way valve (52) directs the liquefied petroleum gas (4) towards the internal combustion engine (2) through the feed line (20), the three-way valve directing all exhaust gases towards the outside environment of the vehicle through the exhaust pipe (42).
